# EUROPEAN PATENT SPECIFICATION

(11) **EP 1 327 830 B1**
(45) Date of publication and mention of the grant of the patent: **26.09.2007**
(21) Application number: 03250173.6
(22) Date of filing: 10.01.2003
(51) Int. Cl.: F24F 11/00, B60H 1/00

(54) **HVAC control device**
Steuereinrichtung für HVAC Geräte
Dispositif de commande de cvc (hvac)

(30) Priority: 11.01.2002 IT RM20020012
(43) Date of publication of application: 16.07.2003
(73) Proprietor: CARRIER CORPORATION, Farmington, Connecticut 06034-4015 (US)
(72) Inventor: Ammendola, Antonio, Lissone, 20035 Milan (IT); Gobbo, Francesco, San Donato Milanese, 20097 Milan (IT); Galeazzi, Giuliano, 21100 Varese (IT); Vecchi, Gianluca, Vimercate, 20059 Milan (IT)
(74) Representative: Leckey, David Herbert

(56) References cited:
- EP-A- 1 081 694
- US-A- 4 995 554
- US-A- 5 700 191
- US-A- 5 931 378

## Description

This invention relates to the control of a heating, ventilation and air conditioning (HVAC) unit and in particular to the control device used to establish a temperature set point and a fan speed for such a unit.

Control devices for establishing temperature set point and fan speed for an HVAC unit typically include individual knobs to select each control parameter. These knobs are usually spaced from each other so as to allow a person to read the available settings for each parameter and turn the knob to the selected setting. These spaced knobs typically require sufficient room on a unit or on a separate wall mounted control device so as to allow for the aforementioned manipulation of the knobs. There is usually ample space on the front of a unit for locating such spaced knobs. Placing the individual knobs on a wall mounted control device however requires making the device large enough to accommodate both the knobs and associated settings. This is not particularly aesthetically pleasing.

US 4,995,554 discloses a control unit for a heating and ventilating installation for an automotive vehicle comprising two coaxial, rotatable control knobs for controlling the temperature and the air distribution within the vehicle.

US 5,931,378 discloses a control unit for an air-conditioning system of a motor vehicle, again, comprising two coaxial, rotatable control knobs.

According to an aspect of the present invention there is provided a control device for an HVAC unit as claimed in claim 1.

In a preferred embodiment of the present invention, a control device is provided which can be mounted on a wall or within an HVAC unit. The control device includes concentric, independently rotatable dials for selecting temperature settings and fan speed settings for an HVAC unit The temperature settings that may be selected are preferably formed along an arc adjacent to the outer circumference of the larger rotatable dial whereas the fan settings are preferably formed along another arc adjacent to the outer circumference of the larger rotatable dial.

Further advantages of the present invention will be apparent from the following description in conjunction with the accompanying drawings, in which:
Figure 1 illustrates a control device for an HVAC unit having coaxial dials for selecting temperature and fan settings;
Figure 2 is a cross-sectional view illustrating the mounting of the coaxial dials within the control device of Figure 1; and
Figure 3 illustrates the manner in which one potentiometer within the control device is driven by one of the coaxial dials.

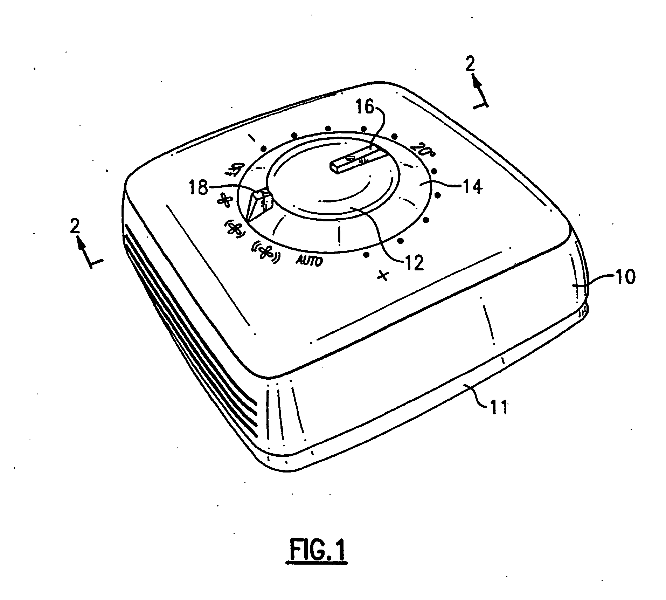

Referring to Figure 1, an HVAC control device having a top casing 10 and a back plate 11 is shown. It is to be understood that the control device may be mounted to a wall or within an HVAC unit. If mounted to a wall, the back plate 11 will have appropriate holes or slots therein for accommodating screws or fasteners that allow it to be attached to a wall. The control device includes a pair of concentric dials 12 and 14. Each of the concentric dials are independently rotatable about a common axis through the center of each dial. The inner rotatable dial 12 preferably includes a raised pointer 16 which may be grasped or engaged so as to rotate the dial 12 and pointer 16 to a particular temperature setting located on the surface of the casing 10 of the control device. The temperature settings preferably are spaced along a circumferential arc adjacent to the outer concentric dial 14.

The outer rotatable dial 14 preferably includes a raised pointer 18 which may be grasped or engaged so as to rotate the dial 14 to a fan speed setting. The fan speed settings are preferably spaced along a second circumferential arc adjacent to the outer circumferential dial 14. It is to be appreciated that each fan speed setting along the second circumferential arc preferably defines a given fan speed or fan mode for a fan within an HVAC unit (not shown).

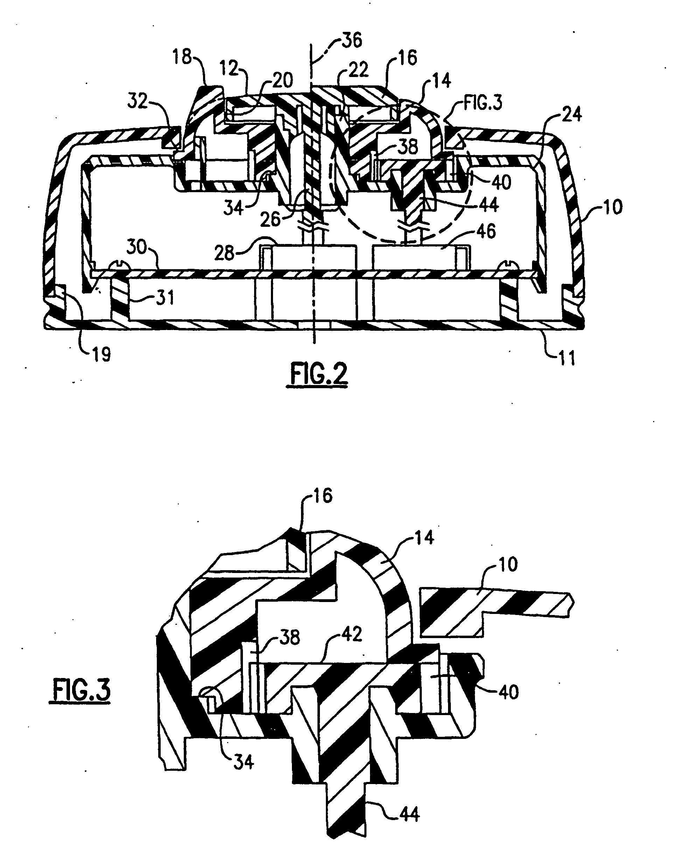

Referring to Figure 2, the casing 10 preferably mounts with a slight interference fit over a rim 19 extending upwardly from the bottom of the back plate 11. The inner dial 12 is seated within a cavity 20 of the outer dial 14. The inner dial 12 is moreover rotatably mounted on a collar 22 which is part of a support cradle 24. The inner dial 12 extends downwardly in the form of a shaft 26. The shaft 26 extends into a potentiometer 28 associated with a printed circuit board 30. The printed circuit board 30 is fixedly attached by suitable means such as screws to upwardly extending protrusions such as 31 formed in the back plate 11. It is to be noted that the lower portion of the support cradle 24 ends in a hook configuration that captures the perimeter of the printed circuit board. The protrusions from the backplate 11 therefore support the printed circuit board 30 and the support cradle 24. The support cradle in turn supports the inner dial 12 that is rotatably mounted to the collar 22 of the support cradle. It is to be appreciated that a rotation of the inner dial 12 will cause the shaft 26 to rotate within the potentiometer 28. Each rotational position of the shaft 26 will define a particular resistance within the potentiometer 28 that will in turn establish a voltage in a circuit on the printed circuit board. The established voltage will correspond to a selected temperature setting located on the casing 10 of the control device.

The outer dial 14 is rotatably supported at its circumferential lip 32 by the support cradle 24. The outer dial 14 is also rotatably supported by a lip 34 of the collar 22. It is to be appreciated that the outer dial and the inner dial rotate about the same axis 36 extending down through the centers of the dials and down through the center of the collar 22.

Referring to Figures 2 and 3, the outer dial 14 includes integrally formed gear teeth 38 which engage the gear teeth 40 of a separately mounted rotatable shaft structure 42. The shaft structure 42 is rotatably mounted to the support cradle 24. Referring to Figure 2 the shaft portion 44 of the rotatable shaft structure 42 extends downwardly into a potentiometer 46 associated with the circuit board 30. A rotation of the outer dial 14 will in turn rotatably move the rotatable shaft structure 42 so as to define a position of the shaft portion 44 extending into the potentiometer 46. This position will define a resistance within the potentiometer 46 which in turn establishes a voltage in a circuit on the printed circuit board. The established voltage will correspond to a selected fan setting on the casing 10 of the control device.

It is to be appreciated that a preferred embodiment of a control device having coaxial dials for temperature and fan settings has been disclosed. Alterations and modifications of the thus disclosed device may occur without departing from the scope of the invention as disclosed by the appended claims. Accordingly, the forgoing description of the preferred embodiment is to be limited only by the following claims.

## Claims

1. A control device for an HVAC unit comprising:
a first rotatable dial (12) for defining a temperature setting for the HVAC unit; and
a second rotatable dial (14) for defining a fan setting for a fan within the HVAC unit, wherein the first rotatable dial (12) has an axis of rotation (36) concentric with the axis of rotation of the second rotatable dial (14);
said control device being **characterised in that**:
the first rotatable dial (12) turns a first shaft (26) associated with a first potentiometer (28) so as to define a voltage corresponding to the selected temperature setting; and
the second rotatable dial (14) turns a second shaft structure (42, 44) associated with a second potentiometer (46) so as to define a voltage corresponding to the selected fan setting, wherein the first shaft (26) has an axis of rotation different from the axis of rotation of the second shaft structure (42, 44).

2. The control device of claim wherein the first rotatable dial (12) and the second rotatable dial (14) are rotatably mounted on support structure (24) within the control device, said support structure (24) allowing said first rotatable dial (12) to independently rotate relative to the second rotatable dial (14).

3. The control device of claim 1 or 2 wherein the first rotatable dial (12) and the second rotatable dial (14) each include a raised pointer (16, 18) on the dial that may be grasped when moving the respective dial.

4. The control device of any preceding claim further comprising distinct fan settings and defined temperature settings located near the outer circumference of the rotatable dial having the larger diameter

5. The control device of any preceding claim wherein the first rotatable dial (12) is located within a cavity (20) formed in the second rotatable dial (14).

6. The control device of claim 5 wherein the maximum diameter of the first rotatable dial (12) is less than the maximum diameter of the cavity (20).

7. The control device of any preceding claim, wherein the second rotatable dial (14) comprises integrally formed gear teeth (38) that engage complementary gear teeth (40) on the second shaft structure (42, 44).

## Patentansprüche

1. Steuervorrichtung für ein Klimagerät (HVAC-Gerät) aufweisend:
eine erste drehbare Wähleinrichtung (12), um eine Temperatureinstellung für das Klimagerät festzulegen; und
eine zweite drehbare Wähleinrichtung (14), um eine Lüftereinstellung für einen Lüfter in dem Klimagerät festzulegen, wobei die erste drehbare Wähleinrichtung (12) eine Rotationsachse (36) hat, die konzentrisch mit der Rotationsachse der zweiten drehbaren Wähleinrichtung (14) ist;
wobei die Steuervorrichtung **dadurch gekennzeichnet ist, dass**
die erste drehbare Wähleinrichtung (12) eine erste Welle (26) dreht, die mit einem ersten Potentiometer (28) verbunden ist, um so eine Spannung festzulegen, die der ausgewählten Temperatureinstellung entspricht; und
die zweite drehbare Wähleinrichtung (14) eine zweite Wellenstruktur (42, 44) dreht, die mit einem zweiten Potentiometer (46) verbunden ist, um eine Spannung festzulegen, die der ausgewählten Lüftereinstellung entspricht, wobei die erste Welle (26) eine andere Rotationsachse als die zweite Wellenstruktur (42, 44) hat.

2. Steuervorrichtung nach Anspruch 1, wobei die erste drehbare Wähleinrichtung (12) und die zweite drehbare Wähleinrichtung (14) drehbar auf einer Abstützstruktur (24) innerhalb der Steuervorrichtung befestigt sind, wobei die Abstützstruktur (24) zulässt, dass sich die erste drehbare Wähleinrichtung (12) unabhängig relativ zu der zweiten drehbaren Wähleinrichtung (14) dreht.

3. Steuervorrichtung nach Anspruch 1 oder 2, wobei die erste drehbare Wähleinrichtung (12) und die zweite drehbare Wähleinrichtung (14) jeweils einen erhöhten Zeiger (16, 18) auf der Wähleinrichtung beinhalten, der beim Bewegen der jeweiligen Wähleinrichtung gegriffen werden kann.

4. Steuervorrichtung nach einem der vorangehenden Ansprüche, die weiterhin verschiedene Lüftereinstellungen und definierte Temperatureinstellungen aufweist, die in der Nähe des äußeren Umfangs der drehbaren Wähleinrichtung, die den größeren Durchmesser hat, angeordnet sind.

5. Steuervorrichtung nach einem der vorangehenden Ansprüche, wobei die erste drehbare Wähleinrichtung (12) in einer Ausnehmung (20) angeordnet ist, die in der zweiten drehbaren Wähleinrichtung (14) ausgebildet ist.

6. Steuervorrichtung nach Anspruch 5, wobei der maximale Durchmesser der ersten drehbaren Wähleinrichtung (12) kleiner ist als der maximale Durchmesser der Ausnehmung (20).

7. Steuervorrichtung nach einem der vorangehenden Ansprüche, wobei die zweite drehbare Wähleinrichtung (14) eine einstückig ausgebildete Verzahnung (38) aufweist, die in eine komplementäre Verzahnung (14) auf der zweiten Wellenstruktur (42, 44) eingreift.

## Revendications

1. Dispositif de commande pour une unité CVCA comprenant :
un premier cadrant rotatif (12) pour définir un réglage de température pour l'unité CVCA ; et
un deuxième cadran rotatif (14) pour définir un réglage de ventilation pour un ventilateur dans l'unité CVCA, dans lequel le premier cadran rotatif (12) a un axe de rotation (36) concentrique par rapport à l'axe de rotation du deuxième cadran rotatif (14) ;
ledit dispositif de commande étant **caractérisé en ce que** :
le premier cadran rotatif (12) tourne un premier arbre (26) associé à un premier potentiomètre (28) de manière à définir une tension correspondant au réglage de température sélectionné ; et
le deuxième cadran rotatif (14) tourne une deuxième structure d'arbre (42, 44) associée à un deuxième potentiomètre (46) de manière à définir une tension correspondant au réglage de ventilation sélectionné, dans lequel le premier arbre (26) a un axe de rotation différent de l'axe de rotation de la deuxième structure d'arbre (42, 44).

2. Dispositif de commande selon la revendication 1, dans lequel le premier cadran rotatif (12) et le deuxième cadran rotatif (14) sont montés de manière rotative sur une structure de support (24) dans le dispositif de commande, ladite structure de support (24) permettant audit premier cadran rotatif (12) de tourner de manière indépendante par rapport au deuxième cadran rotatif (14).

3. Dispositif de commande selon la revendication 1 ou 2, dans lequel le premier cadran rotatif (12) et le deuxième cadran rotatif (14) comprennent chacun une aiguille indicatrice surélevée (16, 18) sur le cadran, pouvant être saisie lors du déplacement du cadran respectif.

4. Dispositif de commande selon l'une quelconque des revendications précédentes, comprenant en outre des réglages de ventilation distincts et des réglages de température définis situés à proximité de la circonférence externe du cadran rotatif ayant le diamètre le plus important.

5. Dispositif de commande selon l'une quelconque des revendications précédentes, dans lequel le premier cadran rotatif (12) est situé dans une cavité (20) formée dans le deuxième cadran rotatif (14).

6. Dispositif de commande selon la revendication 5, dans lequel le diamètre maximal du premier cadran rotatif (12) est inférieur au diamètre maximal de la cavité (20).

7. Dispositif de commande selon l'une quelconque des revendications précédentes, dans lequel le deuxième cadran rotatif (14) comprend une denture intégrée (38) venant en prise avec une denture complémentaire (40) sur la deuxième structure d'arbre (42, 44).
